# EUROPÄISCHE PATENTANMELDUNG

(11) **EP 1 950 764 A1**
(43) Veröffentlichungstag der Anmeldung: **30.07.2008**
(21) Anmeldenummer: 07001396.6
(22) Anmeldetag: 23.01.2007
(51) Int. Cl.: G12B 21/00, G01N 13/10, G12B 21/22

(54) **Fluidzelle für die Rastersondenmikroskopie oder Kraftsprektroskopie**

(71) Anmelder: Nambition GmbH, 01307 Dresden (DE); Technische Universität Dresden, 01062 Dresden (DE)
(72) Erfinder: Wahl, Reiner, 01309 Dresden (DE); Bartscherer, Erik, 01309 Dresden (DE); Kubis, Harald, 01279 Dresden (DE); Geisler, Ulrich, 01705 Freital (DE)
(74) Vertreter: Samson & Partner

(57) **Zusammenfassung**

Die Erfindung betrifft eine Fluidzelle zur Montage in einem Rastersondenmikroskop, zum Beispiel einem Rasterkraftmikroskop, oder einem Kraftspektroskop, wobei die Fluidzelle aufweist: einen Grundträger (1); einen am Grundträger (1) angeordneten Probenträger (15), auf welchem eine zu vermessende Probe anordenbar ist; und ein Oberteil (7), welches auf einer dem Probenträger (15) zugewandten Seite eine vormontierte Messeinrichtung (11) für eine rastersondenmikroskopische oder kraftspektroskopische Messung aufweist, wobei das Oberteil (7) mit dem Grundträger (1) derart verbindbar ist, dass sich eine geschlossene Probenkammer (17) um die zu vermessende Probe bildet und die derart geschlossene Fluidzelle auf das Rastersondenmikroskop bzw. das Kraftspektroskop montierbar ist.

## Beschreibung

### GEBIET DER ERFINDUNG

Die vorliegende Erfindung liegt im Allgemeinen auf dem Gebiet von Vorrichtungen und Verfahren zur Untersuchung biologischer Systeme sowie Festkörpersysteme, und insbesondere solche, die rastersondenmikroskopische, speziell rasterkraftmikroskopische, oder kraftspektroskopische Untersuchungen ermöglichen. Die Erfindung betrifft einen Probenträger für die Sondenmikroskopie, und bspw. eine Fluidzelle für die Rasterkraftmikroskopie oder Kraftspektroskopie, und vorteilhafte Verwendungen derselben..

### HINTERGRUND DER ERFINDUNG

Rastersondenmikroskopische Ansätze werden im allgemeinen verwendet, um Oberflächentopografien von Proben (wie bspw. biologischen Proben, Festkörpern, Flüssigkeiten, etc.) mit hoher lateraler und vertikaler Auflösung zu bestimmen. Unter lateraler Auflösung ist hierbei die Auflösung in einer Ebene einer zu untersuchenden Oberfläche einer Probe zu verstehen, während die Auflösung senkrecht zu dieser Ebene als vertikale Auflösung bezeichnet wird.

Beispiele für rastersondenmikroskopische (SPM, engl. Scanning Probe Microscopy) Ansätze umfassen rastertunnelmikroskopische Ansätze oder rasterkraftmikroskopische Ansätze, wie zum Beispiel die Rasterkraftmikroskopie (SFM, engl.: scanning force microscopy) oder Kraftspektroskopie.

Mit kraftmikroskopischen Ansätzen können neben der Topografie einer Oberfläche einer Probe auch ihre Elastizität oder dort wirkende Adhäsionskräfte erfasst werden. Die atomare Kraftmikroskopie, in diesem Falle üblicherweise als "Kraftspektroskopie" bezeichnet, ermittelt molekulare Kräfte einer Probe mittels einer Sonde, mit der die Probe abgetastet wird, um z.B. Wechselwirkungen zwischen einzelnen Molekülen quantitativ zu charakterisieren. Üblicherweise umfasst die Sonde eine an einem freitragenden Ausleger oder Messbalken, der auch als Cantilever bezeichnet wird, befestigte Spitze. Zur Untersuchung der Probe wird z.B. die Sonde über die Oberfläche der Probe gerastert, wobei die lateralen und vertikalen Positionen und/oder Auslenkungen der Sonde aufgezeichnet werden. Bewegungen der Sonde relativ zu der Probe sind aufgrund der elastischen Eigenschaften der Sonde und insbesondere des Cantilever möglich. Auf der Grundlage erfasster lateraler und vertikaler Positionen und/oder Auslenkungen der Sonde werden molekulare Kräfte seitens der Probe und daraus deren Oberflächentopografie ermittelt.

Üblicherweise werden Bewegungen der Sonde mittels optischer Messeinrichtungen ermittelt, die Auflösungen im Bereich von 0,1 nm haben und eine Detektion von Kräften von einigen pN ermöglichen.

Um die Oberflächentopografie einer biologischen Probe zu ermitteln, werden beispielsweise die Oberflächen der Probe und die Sonde eines Rasterkraftmikroskops derart miteinander in Kontakt gebracht, dass eine zwischen diesen wirkende Kraft auf einen vorbestimmten Wert (z.B. 50 - 100 pN) festgelegt wird. Danach werden die Probe und die Sonde relativ zu einander lateral so bewegt, dass eine gerasterte Abtastung der Oberflächenprobe durch die Sonde erfolgt. Dabei werden die Probe und/oder die Sonde auch vertikal bewegt, um die zwischen ihnen wirkende Kraft auf dem vorgegebenen Wert zu halten. Bewegungen der Probe und der Sonde relativ zu einander können durch eine entsprechende Anordnung, die beispielsweise eine Piezokeramik umfasst, bewirkt werden.

Proben werden in der Rasterkraftmikroskopie bspw. an der umgebenden Luft, im Vakuum oder aber auch zumindest teilweise in einem Fluid untersucht. Letzteres ermöglicht bspw. auch die Untersuchung von biologischen Proben in Pufferlösungen (beispielsweise unter physiologischen Bedingungen) oder von Polymerschmelzen mit hohem Dampfdruck. Teilweise ist auch das Fluid selbst Gegenstand der Untersuchung. Um eine Probe in einem Fluid einer Untersuchung zugänglich zu machen befindet sich diese oftmals in einer Messzelle oder Probenkammer, bspw. einer Flüssigkeits- oder Fluidzelle.

Im Stand der Technik werden Fluidzellen oftmals manuell bspw. in einem Kraftmikroskop zusammengesetzt. Der für den Durchgang des Laserlichtes transparente Hauptteil (bspw. Oberteil) der Fluidzelle ist bspw. aus Glas. Solche bekannten Glas-Fluidzellen umfassen gefräste und/oder geschliffene Teile und sind aufgrund Ihrer Komplexität und den hohen Fertigungsanforderungen teuer. Eine andere bekannte Variante einer Fluidzelle umfasst eine Kombination aus einer Basis aus Kunststoff (bspw. PEEK), die einen Probenträger aus Glas aufnimmt, und einem Cantileverhalter aus Stahl und Glas. Beide Teile sind durch eine Dichtung (bspw. Viton O-Ring) verbunden. Auch in diesem Fall umfasst die Fluidzelle einzelne Teile, die erst im Mikroskop zusammengesetzt werden. Solche Fluidzellen sind aufgrund ihrer hohen Herstellungskosten nicht für den Einweggebrauch bestimmt und müssen nach jedem Gebrauch gereinigt werden bevor sie wiederverwertet werden können.

Weiterhin wird bei bekannten Fluidzellen ein abgeschlossenes Volumen über der Probe erst unmittelbar am oder im Kraftmikroskop oder Kraftspektroskop bspw. durch Zusammensetzten der Probe und einzelner Komponenten der Fluidzelle erreicht.

In US Re. 34,489 ist eine bekannte Fluidzelle für ein Atomkraftmikroskop offenbart. Die Fluidzelle weist ein austauschbares Sondenträgermodul auf, an dessen Unterseite eine Messsonde angebracht ist. Die Messsonde befindet sich an einem Substrat, welches an einer Eintiefung an der Unterseite des Trägermoduls festgeklebt wird. Um das Substrat mit der Sonde herum ist ein O-Dichtring an der Unterseite des Trägermoduls ebenfalls angeklebt. Montiert man das Sondenträgermodul auf den Probenträger des Atomkraftmikroskops, so entsteht die Fluidzelle innerhalb des O-Rings in Kombination mit der Unterseite des Sondenträgermoduls und der Oberseite des Probenträgers.

Aufgabe der vorliegenden Erfindung ist es, eine verbesserte Fluidzelle bereitzustellen.

### KURZFASSUNG DER ERFINDUNG

Nach einem ersten Aspekt stellt die Erfindung eine Fluidzelle zur Montage an einem Rastersondenmikroskop, zum Beispiel einem Rasterkraftmikroskop, oder einem Kraftspektroskop, zur Verfügung die bereits außerhalb des Rasterkraftmikroskops bzw. Kraftspektroskops zu einer geschlossenen Messzelle zusammengebaut werden kann. Hierfür weist die Fluidzelle auf: einen Grundträger; einen am Grundträger angeordneten Probenträger, auf welchem eine zu vermessende Probe anordenbar ist; und ein Oberteil, welches auf einer dem Probenträger zugewandten Seite eine vormontierte Messeinrichtung für eine rastersondenmikroskopische oder kraftspektroskopische Messung aufweist, wobei das Oberteil mit dem Grundträger derart, z.B. mechanisch, verbindbar ist, dass sich eine geschlossene Probenkammer um die zu vermessende Probe bildet und die derart geschlossene Fluidzelle auf das Rastersondenmikroskop bzw. das Kraftspektroskop montierbar ist.

Ein weiterer Aspekt der Erfindung betrifft die Verwendung einer derartigen Fluidzelle zum Einmalgebrauch, d.h. als Einwegzelle, für die Durchführung rastersondenmikroskopischer oder kraftspektroskopischer Messungen in einem Rastersondenmikroskop, zum Beispiel einem Rasterkraftmikroskop, oder einem Kraftspektroskop.

Ein noch weiterer Aspekt der Erfindung betrifft die Verwendung einer derartigen Fluidzelle in einem automatisierten Verfahren zur Durchführung rastersondenmikroskopischer oder kraftspektroskopischer Messungen in einem Rastersondenmikroskop, zum Beispiel einem Rasterkraftmikroskop, oder einem Kraftspektroskop.

Weitere Aspekte und Merkmale der Erfindung ergeben sich aus den abhängigen Ansprüchen, der nachfolgenden Beschreibung von Ausführungsbeispielen und der beigefügten Zeichnung.

### KURZBESCHREIBUNG DER ZEICHNUNG

Ausführungsbeispiele der Erfindung werden nun beispielhaft und unter Bezugnahme auf die angefügte Zeichnung beschrieben, in der:
Fig. 1 eine Fluidzelle gemäß einem ersten Ausführungsbeispiel in einer schematischen Schnittansicht zeigt;
Fig. 2 die Fluidzelle gemäß dem ersten Ausführungsbeispiel in einer schematischen Draufsicht zeigt;
Fig. 3 die Fluidzelle gemäß dem ersten Ausführungsbeispiel in einer weiteren schematischen Teil-Schnittansicht zeigt;
Fig. 4 eine Fluidzelle gemäß einem zweiten Ausführungsbeispiel in einer schematischen Schnittansicht zeigt;
Fig. 5 die Fluidzelle gemäß dem zweiten Ausführungsbeispiel in einer weiteren schematischen Schnittansicht zeigt;
Fig. 6 die Fluidzelle gemäß dem ersten Ausführungsbeispiel in einem Kraftmikroskop oder Kraftspektroskop in einer schematischen Schnittansicht veranschaulicht;
Fig. 7 die Fluidzelle gemäß dem ersten Ausführungsbeispiel in einem Kraftmikroskop oder Kraftspektroskop in einer weiteren schematischen Schnittansicht veranschaulicht;
Fig. 8 die Fluidzelle gemäß einem dritten Ausführungsbeispiel in einem Kraftmikroskop oder Kraftspektroskop in einer schematische Schnittansicht veranschaulicht; und
Fig. 9 einen automatisierten Ablauf für das Bestücken und das Einsetzen einer Fluidzelle, wie sie in einer der Figuren 1 bis 8 gezeigt ist, veranschaulicht.

### BESCHREIBUNG BEVORZUGTER AUSFÜHRUNGSBEISPIELE

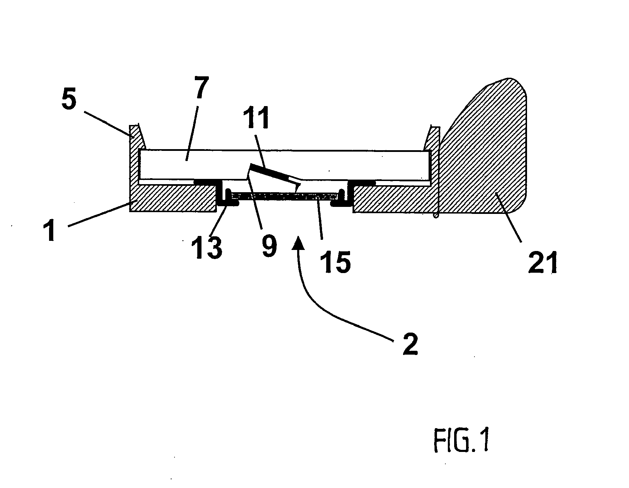

Fig. 1 veranschaulicht im Detail eine Fluidzelle gemäß einem ersten Ausführungsbeispiel in einer Schnittsansicht durch die Fluidzelle. Gleiche Bezugszeichen in den Figuren bezeichnen gleiche oder ähnliche Teile in den Ausführungsbeispielen. Vor einer detaillierten Beschreibung der Fig. 1 folgen zunächst allgemeine Erläuterungen zu den Ausführungsbeispielen.

Flüssigkeitszellen oder Fluidzellen werden in manchen Ausführungsbeispielen in der Rastersondenmikroskopie, z.B. der abbildenden Rasterkraftmikroskopie, Rastertunnelmikroskopie etc., oder Kraftspektroskopie eingesetzt. Vorzugsweise umfasst die Fluidzelle eine Probenkammer, in der ein Fluid aufgenommen werden kann, mit dem eine auf dem Probenträger anzuordnende Probe umgeben werden soll. Hierbei ist unter "umgeben" zu verstehen, dass wenigstens der Bereich der Probe, der untersucht werden soll, von Fluid umgeben ist, beispielsweise eine bestimmte Oberfläche der Probe. In manchen Ausführungsbeispielen umfasst eine Fluidzelle ein Oberteil und einen Grundträger. Zur Untersuchung von Proben umfasst die Fluidzelle in manchen Ausführungsbeispielen einen Probenträger, auf den eine Probe aufgebracht werden kann. Eine Messeinrichtung, die ebenfalls in der Fluidzelle angeordnet ist, ist in manchen Ausführungsbeispielen so eingerichtet, dass sie die Probe ausmessen oder vermessen kann und bspw. Kräfte registriert, die zwischen der Probe und der Messeinrichtung wirken. Dazu umfasst die Messeinrichtung in manchen Ausführungsbeispielen eine Sonde, die wiederum einen Ausleger (sog. Cantilever) umfasst, der eine Messspitze aufweist, die über die Probe geführt (bspw. gerastert) wird. In manchen Ausführungsbeispielen ist die Messeinrichtung bspw. an dem Oberteil vormontiert.

Bei einem Ausführungsbeispiel ist das Oberteil der Fluidzelle gegenüber dem Grundträger der Fluidzelle von einer ersten, geöffneten Position in eine zweite, geschlossene Position bringbar. Auf diese Weise kann eine zu vermessende Probe bereits außerhalb des Mikroskops bzw. Spektroskops in die Fluidzelle eingebracht und in der geschlossenen Zelle in eine definierte Messsituation relativ zu der Messeinrichtung bzw. zum Cantilever gebracht werden. Ein Probenwechsel im Mikroskop/Spektroskop beschränkt sich dann auf eine Montage oder Demontage der geschlossenen Messzelle. Eine solche erfindungsgemäße Messzelle, die bereits außerhalb des Mikroskops/Spektroskops ohne aufwendige Justage zusammengesetzt werden kann, ermöglicht einen leichteren Probenwechsel im Mikroskop/Spektroskop und damit einen erhöhten Probendurchsatz. Sie eignet sich vorteilhaft auch in einem automatisierten Mess- und Probenwechselablauf

Die Messeinrichtung ist in manchen Ausführungsbeispielen an dem Oberteil der Fluidzelle angeordnet. Dazu umfasst das Oberteil in manchen Ausführungsbeispielen einen Bereich der so ausgestaltet ist, dass er die Messeinrichtung aufnehmen kann. In manchen Ausführungsbeispielen umfasst das Oberteil und/oder die Messeinrichtung eine Befestigungseinrichtung, die die Messeinrichtung und das Oberteil miteinander verbindet (bspw. mittels geklemmter, geklebter und/oder gefederter Verbindung). In manchen Ausführungsbeispielen werden Auslenkungen - bspw. des Cantilevers, mittels eines Messstrahles erfasst, der von der Messseinrichtung reflektiert wird. Damit der Messstrahl die Messseinrichtung (wie bspw. den Cantilever) erreicht, ist das Oberteil in manchen Ausführungsbeispielen für den Messstrahl durchlässig, z.B. transparent.

In manchen Ausführungsbeispielen findet eine Untersuchung der Probe in einem Fluid statt. Dazu umfasst die Fluidzelle einen abgeschlossenen Raum, in dem das Fluid eingebracht ist. Dieser abgeschlossene Raum wird in manchen Ausführungsbeispielen durch das Zusammenspiel von einer Dichtung, dem Probenträger und dem Oberteil der Fluidzelle, hergestellt. Die Dichtung befindet sich in einer Öffnung des Grundträgers (der in manchen Ausführungsbeispielen Kunststoff umfasst) und steht sowohl mit dem Probenträger als auch dem Grundträger in Kontakt. Weiterhin kann sie in Kontakt mit dem Oberteil stehen, wenn das Oberteil entsprechend oberhalb des Grundträgers angeordnet ist. Dadurch entsteht in manchen Ausführungsbeispielen ein Raum für ein Fluid, der durch den Probenträger, die Dichtung und das Oberteil begrenzt ist. Dieser Raum umfasst in manchen Ausführungsbeispielen ein abgeschlossenes Volumen. Wie oben ausgeführt, ist an dem Oberteil auf einer Seite die Messeinrichtung angebracht. Wenn das Oberteil oberhalb des Grundträgers angeordnet ist, so befindet sich in manchen Ausführungsbeispielen wenigstens ein Teil, bspw. die Messspitze, innerhalb des Raumes - bspw. so, dass sich die Messspitze oberhalb des Probenträgers befindet.

In manchen Ausführungsbeispielen ist der Probenträger so ausgestaltet, dass er eine lösbare Verbindung mit einem Probenträgerstellelement eines Kraftmikroskops oder Kraftspektroskops eingehen kann. Dazu umfasst der Probenträger in manchen Ausfiihrungsbeispielen bspw. Metall, sodass bspw. über die magnetische Wechselwirkung zwischen dem Metall des Probenträgers und dem Metall des Probenträgerstellelements eine lösbare Verbindung mit dem Probenträgerstellelement hergestellt wird.

In manchen Ausführungsbeispielen sind das Oberteil und der Grundträger miteinander mechanisch verbindbar und/oder verklebbar. Die mechanische Verbindung kann bevorzugt auch wieder gelöst werden. In manchen Ausführungsbeispielen sind das Oberteil und der Grundträger miteinander mechanisch verbunden. Zum Beispiel verbindet in manchen Ausführungsbeispielen eine bewegliche Verbindung, wie bspw. ein Gelenk, eine Seite des Oberteils mit einer Seite des Grundträgers. In manchen Ausführungsbeispielen sind andere Verbindungen verwirklicht, die bspw. eine Führungsnut an dem Oberteil und/oder an dem Grundträger umfasst. In wieder anderen befindet sich ein Scharnier oder eine andere Art von gelenkiger Verbindung zwischen Oberteil und Grundträger.

In manchen Ausführungsbeispielen ist die Dichtung zwischen Oberteil und Grundträger so ausgestaltet, dass sie ihre Dichtfunktion auch dann behält, wenn der an ihr anliegende Probenträger - bspw. durch das Probenträgerstellelement - bewegt wird. Dies wird beispielsweise mit einem Dichtungsmaterial erreicht, welches weich und/oder so elastisch ist, dass es sich unter den Bewegungen des Probenträgers entsprechend verformt und trotzdem noch an dem Oberteil, dem Grundträger und dem Probenträger anliegt.

In manchen Ausführungsbeispielen umfasst das Oberteil und/oder der Grundträger der Fluidzelle einen Führungsbereich. Dieser Führungsbereich ist bspw. so ausgestaltet, dass die Fluidzelle in einer Halterung (bspw. eines Rastersonden-, Rasterkraftmikroskops oder Kraftspektroskops) positioniert werden kann. In manchen Ausführungsbeispielen wird dadurch die Fluidzelle in eine definierte Position gebracht, die bspw. eine Ausrichtung der Fluidzelle gegenüber oder in bspw. einer Vorrichtung wie ein Rastersondenmikroskop (o.ä.) wenigstens teilweise überflüssig macht.

In manchen Ausführungsbeispielen umfasst die Fluidzelle eine Halterung, die dafür sorgt, dass das Oberteil und der Grundträger (in manchen Ausführungsbeispielen auch lösbar) miteinander verbunden ist. Diese Halterung ist in manchen Ausführungsbeispielen so ausgestaltet, dass sie einen gewissen Druck auf die Dichtung ausübt, die zwischen dem Oberteil und dem Grundträger angeordnet ist und bspw. so die Dichtigkeit der Fluidzelle gewährleistet.

Zusätzlich umfasst die Fluidzelle in manchen Ausführungsbeispielen wenigstens einen Fluidanschluss, der sich bspw. in dem Oberteil oder dem Grundträger befinden kann. In manchen Ausführungsbeispielen umfasst der Fluidanschluss bspw. eine Öffnung und teilweise noch zusätzlich einen Fluidkanal, der bspw. in dem Oberteil und/oder dem Grundträger angeordnet ist. In manchen Ausführungsbeispielen erlauben es der bzw. die Fluidanschlüsse, die Fluidzelle in ein offenes oder geschlossenes Fluidiksystem einzubinden. In manchen Ausführungsbeispielen wird die Verbindung der Fluidzelle mit dem Fluidiksystem hergestellt, wenn die Fluidzelle in eine Zellenführung geschoben wird. Dabei wird ein abgedichteter Kontakt zwischen dem oder den Fluidanschlüssen und entsprechenden Aufnahmen in der Zellenführung hergestellt und somit für eine Verbindung der Fluidzelle mit dem Fluidiksystem gesorgt.

Weiterhin umfasst die Fluidzelle in manchen Ausführungsbeispielen eine Öffnung, die abgedichtet ist und durch welche eine Substanz (bspw. Fluid oder eine Probe) in die Fluidzelle eingebracht werden kann. Die Abdichtung dieser Öffnung wird in manchen Ausführungsbeispielen mit einer Membran bewerkstelligt. In manchen Ausführungsbeispielen umfasst die Abdichtung einen Verschluss, wohingegen in manchen Ausführungsbeispielen die Abdichtung ein Septum umfasst, welches durchstochen werden kann und in manchen Ausführungsbeispielen, bspw. nach Entfernen einer Kanüle mit der das Septum durchstochen wurde, wieder dicht ist. Dadurch erfolgt in manchen Ausführungsbeispielen bspw. die Zugabe kleinster Substanzmengen vor, während oder nach einer Messung zum Probenvolumen, ohne die Fluidzelle aus einer Messanordnung zu entfernen.

In manchen Ausführungsbeispielen sind einzelne Komponenten der Fluidzelle (bspw. solche, wie sie oben genannt wurden) in großen Stückzahlen herstellbar und sind mechanisch so aufeinander abgestimmt, dass eine zusätzliche Justage der Komponenten zueinander wenigstens teilweise unnötig ist. Weiterhin ist in manchen Ausführungsbeispielen eine Justage der aus den Komponenten zusammengesetzten Fluidzelle in einer Zellenhalterung (bspw. in einem Rastersonden- oder Rasterkraftmikroskop) nicht notwendig. In manchen Ausführungsbeispielen umfassen die einzelnen Komponenten bspw. Kunststoff, wodurch hohe Stückzahlen möglich sind. In manchen Ausführungsbeispielen werden die Komponenten bspw. in einem Spritzgießverfahren hergestellt.

In manchen Ausführungsbeispielen sorgt die Passgenauigkeit bspw. des Oberteils mit der Messeinrichtung, des Grundträgers und des Probenträgers, der in der Dichtung eingebettet ist, dafür, dass eine Justage dieser Teile zueinander wenigstens teilweise nicht notwendig ist. Auch entfällt in manchen Ausführungsbeispielen wenigstens teilweise eine Justage bzw. Ausrichtung der Fluidzelle in einem Rasterkraftmikroskops oder Kraftspektroskop aufgrund einer Führung an der Fluidzelle und im Rasterkraftmikroskops oder Kraftspektroskop. Durch die Führung ist es möglich die Fluidzelle in eine definierte Position zu bringen, die wenigstens so genau ist, dass eine manuelle Ausrichtung der Fluidzelle nicht notwendig ist. In manchen Ausführungsbeispielen ist es daher möglich, dass die manuelle Ausrichtung der Messeinrichtung entfällt und eine Kalibrierung der Messeinrichtung (bzw. des Messtrahls der von der Messeinrichtung reflektiert wird), auf elektronischem Wege durch spezielle Steuerelemente erfolgen kann.

In manchen Ausführungsbeispielen ist die Fluidzelle kompakt und in manchen Ausführungsbeispielen für den Einmalgebrauch bestimmt. In manchen Ausführungsbeispielen benötigt die Fluidzelle weder Wartung, Rejustage, Reparatur noch Reinigung. In manchen Ausführungsbeispielen werden durch den einmaligen Gebrauch der Fluidzelle Kontaminationen bspw. der Probe bzw. durch die Probe, wie sie bei bekannten Fluidzellen auftreten, vermieden. Weiterhin kann eine nach Gebrauch (mit möglicherweise giftigen oder gesundheitsgefährdenden Substanzen) kontaminierte Fluidzelle einfach fachgerecht und ohne Gefahr für den Nutzer oder Dritte entsorgt werden.

In manchen Ausführungsbeispielen ist es, bspw. für einen Benutzer der Fluidzelle, nicht notwendig einen (hochempfindlichen) Cantilever manuell in eine Fluidzelle einzusetzen, da sich der Cantilever vormontiert an einer Komponente (bspw. Oberteil) der Fluidzelle befindet.

In manchen Ausführungsbeispielen ist die Fluidzelle für den Einsatz in sogenannten Screeningsystemen vorgesehen, bei denen der Wechsel der Fluidzellen durch eine Robotik vorgenommen wird. Solchen Fluidzellen weisen bspw. einen Halterung auf, an der eine Robotik angreifen kann.

In manchen Ausführungsbeispielen ist das Einsetzen der zu untersuchenden Probe in die Fluidzelle leicht möglich. Die Fluidzelle umfasst hierbei bspw. zwei oder mehr Komponenten (wie bspw. Oberteil und Grundträger), die auf einfache Art und Weise verbindbar sind. Z.B. ist bei Ausführungsbeispielen, die einen Klapp- oder Rastmechanismus für bspw. Oberteil und Grundträger umfassen, das Verbinden ohne Werkzeug möglich. Das so generierte System aus Fluidzelle und Probe kann dann bspw. ohne weitere Justage in eine entsprechende Halterung z.B. eines Kraftmikroskops oder Kraftspektroskops eingebracht werden.

In manchen Ausführungsbeispielen ist die Fluidzelle für verschiedene Arten der Kraftmikroskopie und Kraftspektroskopie geeignet. Es können auch verschiedene Arten von Cantilevern für den Einsatz von verschiedenen Arten und Betriebsmodi der Kraftmikroskopie oder Kraftspektroskopie verwendet werden. In manchen Ausführungsbeispielen umfassen diese Arten von Betriebsmodi z.B.:
a) Kontakt- oder Dynamischer Modus,
b) Magnetkraft-Modus
c) Elektrostatische Kräfte
d) Elektrische Ströme und Spannungen
e) Chemische Kräfte
f) Reibungskräfte
g) kolloide Wechselwirkungen

Zurückkommend zu Fig. 1 zeigt diese in seitlicher Schnittansicht einen schematischen Aufbau einer Fluidzelle in Übereinstimmung mit einem ersten Ausführungsbeispiel der vorliegenden Erfindung. Die Fluidzelle umfasst einen Grundträger 1 und ein Oberteil, bspw. ein Zelloberteil 7. In einer runden Öffnung 2 des Grundträgers 1 ist eine Dichtung 13 und ein Probenträger 15 angeordnet. Die Dichtung 13 schmiegt sich an die Innenwand der Öffnung 2 des Grundträgers 1 und verläuft von dort nach oben auf die Oberseite des Grundträgers 1, an der sie ebenfalls anliegt. Weiterhin weist die Dichtung 13 einen Bereich auf, in dem sie in die Richtung der Mitte der Öffnung 2 in dem Probenträger 15 verläuft. In diesem Bereich oberhalb der Dichtung 13 kontaktiert ein Teil des Probenträgers 15 die Dichtung 13. Der Probenträger 15 ist bspw. scheibenförmig gestaltet und weist einen Durchmesser auf, der kleiner als der Durchmesser der Öffnung 2 des Grundträgers 1 ist. Die Dichtung 13 weist eine Dichtungsöffnung auf, deren Durchmesser kleiner als der Durchmesser der Öffnung 2 des Grundträgers 1 ist, und kleiner als der Durchmesser des Probenträgers 15. Die Dichtung 13 weist eine Wand auf, die parallel zu der Wand der Öffnung 2 des Grundträgers 1 verläuft. Die Wand der Dichtung 13 steht in Kontakt mit dem Rand des Probenträgers 15, sodass dort eine Abdichtung erfolgt. Weiterhin steht die Dichtung in Kontakt mit dem Zelloberteil 7, welches in Fig. 1 in die Fluidzelle eingesetzt gezeigt ist. Wie aus Fig. 1 ersichtlich, sorgt eine sich von der Oberseite des Grundträgers (1) aus erstreckende Halterung 5 für eine (je nach Ausführungsbeispiel auch lösbare mechanische) Verbindung zwischen Zelloberteil 7 und dem Grundträger 1. Die Halterung (5) ist nach Art einer Schnapp- oder Rastverbindung ausgebildet und drückt durch ihre elastische Eigenschaft und Formgebung im geschlossenen Zustand auf das Zelloberteil 7, sodass sich dieser Druck auf die Dichtung 13 überträgt. Die Dichtung 13 wird dadurch zwischen Zelloberteil 7 und Grundträger 1 eingeklemmt und gewährleistet somit eine Dichtigkeit in diesem Bereich. Das Zelloberteil 7 weist eine Messeinrichtung 11 auf, die hier eine Sonde mit Cantilever und Sondenspitze umfasst. An dem Grundträger 1 ist ein Griff 21 angeformt, an dem die Fluidzelle gehalten und bewegt werden kann. Der Griff 21 ermöglicht das einfache Anfassen der Fluidzelle per Hand oder das Greifen der Fluidzelle durch eine Robotik.

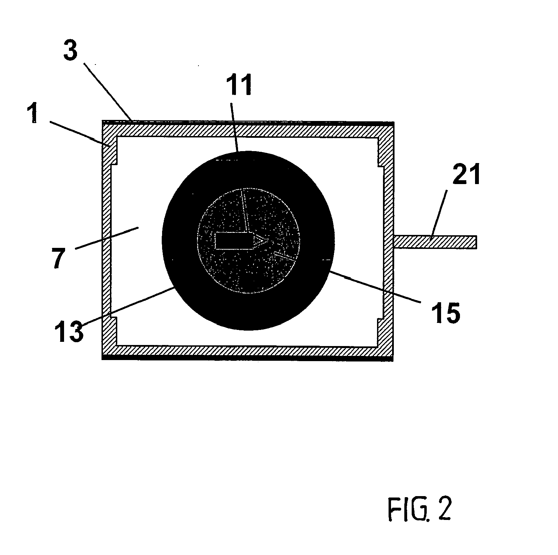

In Fig. 2 ist eine Draufsicht der in Fig. 1 gezeigten Fluidzelle veranschaulicht. In Fig. 2 ist eine Führung 3, die in dem Grundträger 1 der Fluidzelle eingelassen ist, gezeigt. Die Führung 3 dient bspw. der Positionierung in einer Vorrichtung, wie bspw. einem Rastersonden-, Rasterkraftmikroskop oder Kraftspektroskop. Die Führung 3 kann beispielsweise in Form von Schienen realisiert sein, die ein definiertes Einschieben in bspw. eine der genannten Vorrichtungen ermöglichen. Weiterhin ist in Fig. 2 die kreisförmige Formgebung der Öffnung 2 in dem Grundträger 1, der Dichtung 13 und des Probenträgers 15 zu sehen. Mittig zu diesen Komponenten ist die Messeinrichtung 11 angeordnet. Die Form der Öffnungen und/oder der Dichtung 13 und des Probenträgers 15 variiert in den Ausführungsbeispielen und ist nicht auf eine Kreisform eingeschränkt. Der Probenträger 15 umfasst beispielsweise ein magnetisches Metallplättchen, auf dem bspw. ein Substrat, das die eigentliche zu untersuchende Probe trägt, angebracht wird. Die Dichtung 13 ist bspw. aus weichem Kunststoff und in sie kann der Probenträger 15 angeordnet, bspw. eingelegt werden.

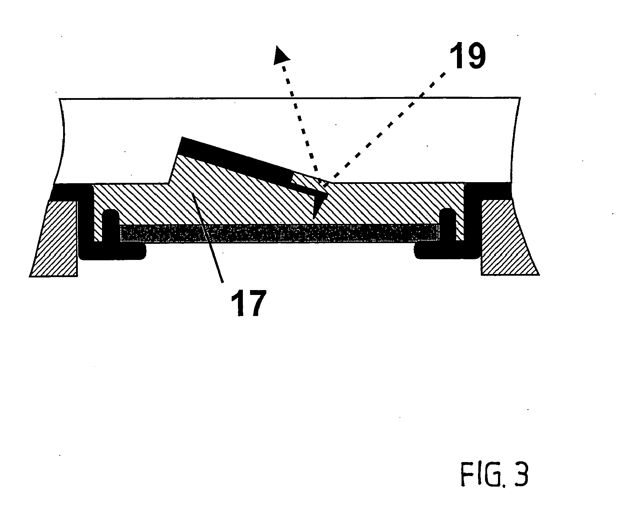

In Fig. 3 ist eine weitere Teil-Schnittansicht der Fluidzelle aus den Fig. 1 und 2 gezeigt. Wenn bspw. das Zelloberteil 7, das bspw. ganz oder in einem Abschnitt transparent ist, auf den Grundträger gedrückt wird, wird es durch die Halterung 5, die bspw. zusätzlich Klammern umfassen kann, fixiert. Zusammen mit der Dichtung 13 entsteht dabei ein abgeschlossenes Volumen bzw. eine abgeschlossene Probenkammer 17 oberhalb der Probe bzw. des Probenträgers 15. Die abgeschlossene Probenkammer 17 ist dabei von der am Grundkörper (1) anliegenden Dichtung 13, dem Probenträger 15 (bspw. inklusive Probe) und dem Zelloberteil 7 begrenzt. Die Messeinrichtung 11 bzw. der Cantilever kann in den Ausführungsbeispielen auf verschiedene Arten im oder am Zelloberteil 7 befestigt sein: zum Beispiel durch Klemmung, durch Klebung oder durch eine zusätzliche Klemmfeder. Das Zelloberteil 7 ist bspw. ganz oder in einem Abschnitt aus transparentem Material (z.B. COC) gefertigt, um den Durchgang des zur Detektion notwendigen Laserlichtes 19 zu ermöglichen.

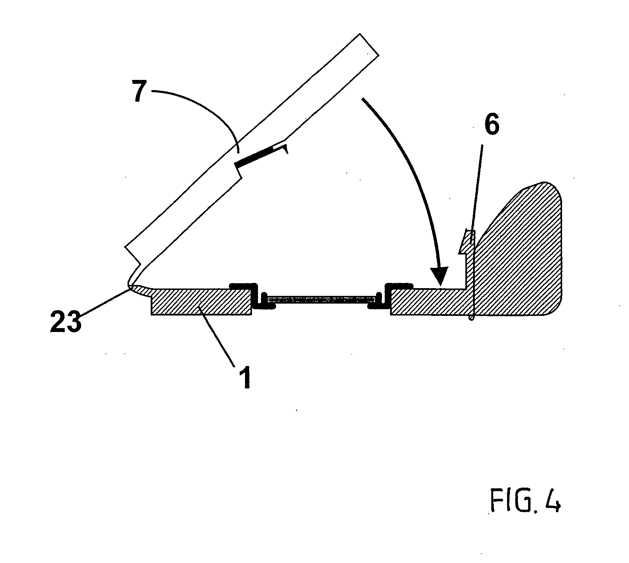

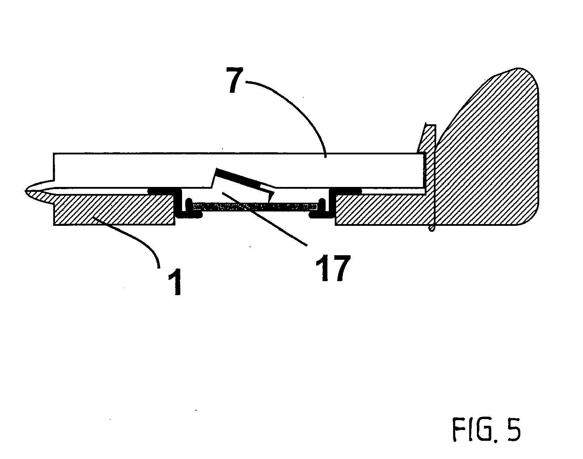

Fig. 4 zeigt ein zweites Ausführungsbeispiel einer Fluidzelle. Der Grundträger 1 und das Zelloberteil 7, die ähnlich den entsprechenden im Zusammenhang mit dem ersten Ausführungsbeispiel beschriebenen Komponenten sind, sind bei diesem Ausführungsbeispiel durch ein Gelenk, zum Beispiel durch ein Scharnier 23, gelenkig verbunden. Ferner ist auf der dem Scharnier 23 gegenüberliegenden Seite ein Vorsprung 6 am Grundträger 1 zum Bilden einer Schnappverbindung vorgesehen, mit welcher das Zelloberteil 7 in der geschlossenen Position in Eingriff gelangen kann. Durch Aufeinanderklappen und Aufdrücken des Zelloberteils 7 auf den Grundträger 1, wobei dieses in Schnappverbindung des Vorsprunges 6 einrastet, wird ähnlich wie im ersten Ausführungsbeispiel ein abgeschlossenes Volumen 17 oberhalb des Probenträgers erzeugt (vgl. Fig. 5). In manchen Ausführungsbeispielen sind Grundträger und Zelloberteil bereits aus einem Teil gefertigt, wobei das Scharnier durch einen dünnen biegbaren Steg gebildet wird. In manchen Ausführungsbeispielen wird ein solches Teil beispielsweise durch Zweikomponenten-Spritzgießen gefertigt.

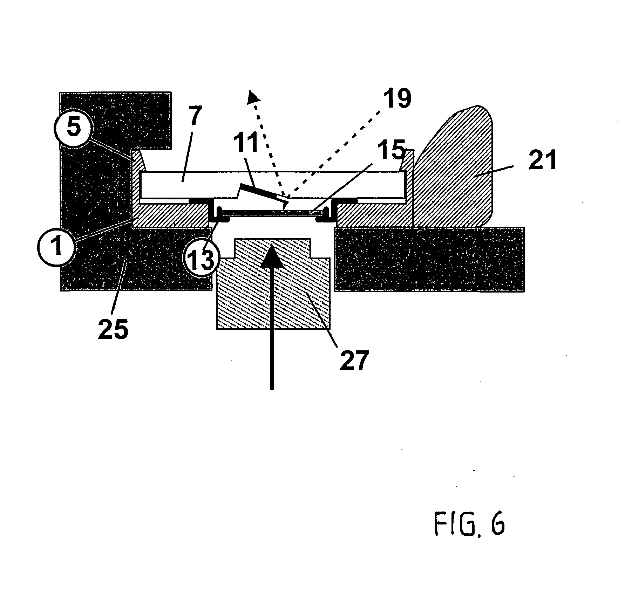

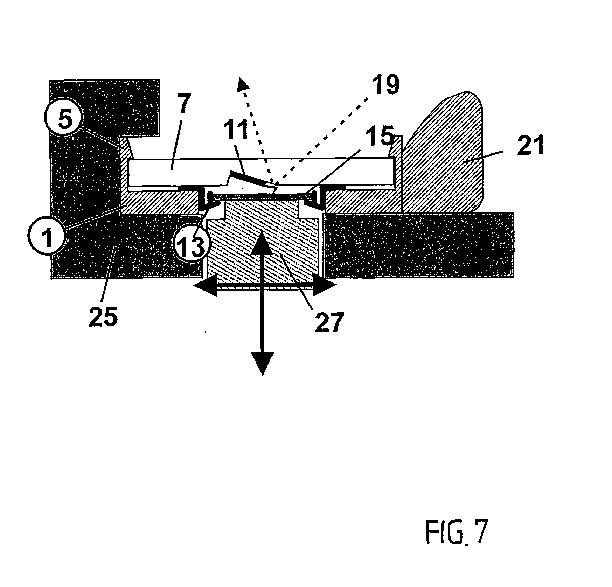

Fig. 6 zeigt eine Fluidzelle, wie sie weiter oben im Zusammenhang mit den Fig. 1 bis 3 beschrieben wurden, eingesetzt in eine Halterung 25 eines Kraftmikroskops oder Kraftspektroskops oder einer ähnlichen Vorrichtung. Die geometrische Ausführung der Fluidzelle und des Grundträgers 1, der mit einer mechanischen Führung 3 ausgestattet ist sorgen für eine definierte Position der Fluidzelle nach dem Einschieben oder Einlegen in die Halterung 25. Nach dem Einlegen der Fluidzelle in die Halterung 25 wird der mit der Positioniereinheit des Mikroskops gekoppelte Magnethalter 27 an den Probenträger 15 angenähert, bis ein Kontakt durch die magnetische Haltekraft erreicht wird (vlg. Fig. 7). Anschließend folgt dann der magnetisch gehaltene Probenträger 15 den Bewegungen der Positioniereinheit, wie durch die Pfeile in Fig. 7 angedeutet. Die elastische Gummidichtung 13 verformt sich entsprechend diesen Bewegungen und sorgt dafür, dass das abgeschlossene Volumen innerhalb der Fluidzelle erhalten bleibt.

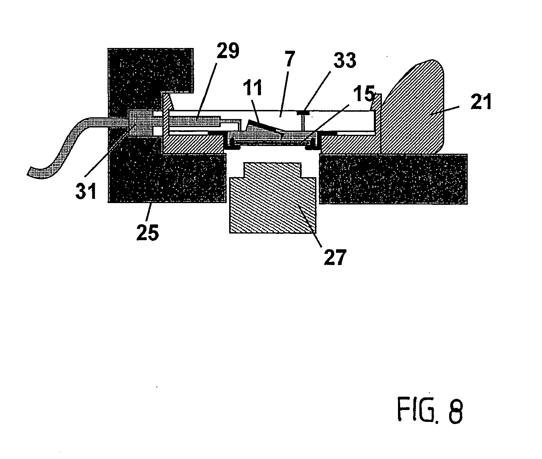

Fig. 8 zeigt ein drittes Ausführungsbeispiel einer Fluidzelle in Übereinstimmung mit der vorliegenden Erfindung. In Fig. 8 ist schematisch die Anbindung der Fluidzelle an ein Fluidiksystem dargestellt. Die Fluidzelle weist einen Fluidanschluss 29 auf, der einen dichten Kontakt mit einer entsprechenden Aufnahme einer Halterung 31 eines Mikroskops eingehen kann. Die Anbindung der Fluidzelle an das Fluidiksystem erfolgt durch die Verbindung des integrierten Fluidanschlusses 29 der Fluidzelle mit den Aufnahmen der Halterung 31 und der damit einhergehenden selbstdichtenden Verbindung der Fluidzelle zu einem externen Fluidiksystem. Der Fluidanschluss verläuft hierzu in dem Zelloberteil 7 und weist bspw. einen Auslass in dem Bereich des Zelloberteils 7 auf, der oberhalb einer Probe bzw. eines Probenträgers 15 befindet. Dadurch ist die Versorgung eines abgeschlossenen Volumens, bspw. eines abgeschlossenen Raumes 17 (wie oben beschrieben), mit einem Fluid möglich. In manchen Ausführungsbeispielen weist die Fluidzelle eine integrierte und mit einem Septum oder einer Membran abgedichtete Öffnung 33 auf. Dies erlaubt ggf. das zusätzliche Einbringen kleiner Flüssigkeitsmengen von außen, nachdem sich die Fluidzelle mit der Probe bereits in einer Halterung bspw. eines Mikroskopes befindet. Dies kann auch bspw. mittels einer Pipettierrobotik erfolgen. Insgesamt wird durch das Fluidiksystem und/oder die Öffnung 33 eine Versorgung der Fluidzelle mit einem Fluid und bspw. ein Fluidaustausch ermöglicht.

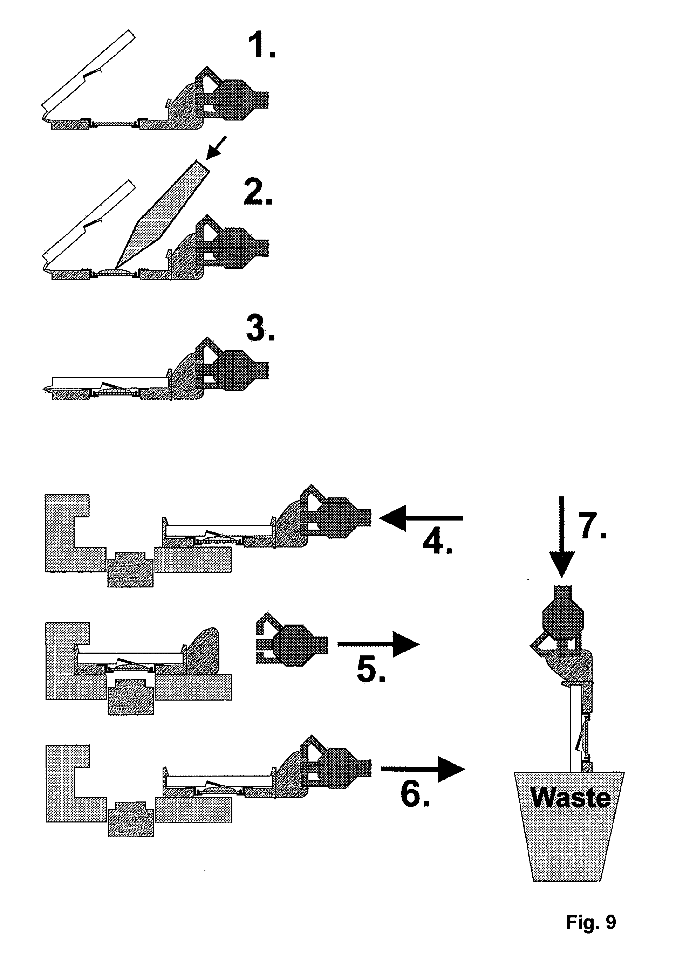

Fig. 9 zeigt schematisch, wie eine oben beschriebene Fluidzelle nach einem bevorzugten Ausführungsbeispiel in eine Robotik integriert werden kann, um einen automatischen Probenwechsel zu ermöglichen:
1. Zunächst greift sich die Robotik eine leere geöffnete Zelle aus einem entsprechenden Zellvorratsbehälter.
2. Anschließend wird die Probe auf den Probenträger aufgebracht.
3. Die Zelle wird durch die Robotik geschlossen.
4. Die Zelle wird durch die Robotik in die entsprechende Aufnahme des Mikroskops oder des Spektroskops eingeführt.
5. Die Robotik löst sich von der Zelle, anschließend können Messungen durchgeführt werden. Ggf. kann durch eine Fluidik das Zellvolumen mit Flüssigkeit gefüllt werden.
6. Nach erfolgter Messung wird die Zelle durch die Robotik erneut gegriffen und aus der Aufnahme des Gerätes entfernt.
7. Die Zelle wird durch die Robotik in einen Abfallsammelbehälter überführt.

## Patentansprüche

1. Fluidzelle zur Montage in einem Rastersondenmikroskop, zum Beispiel einem Rasterkraftmikroskop, oder einem Kraftspektroskop, wobei die Fluidzelle aufweist:
- einen Grundträger (1);
- einen am Grundträger (1) angeordneten Probenträger (15), auf welchem eine zu vermessende Probe anordenbar ist; und
- ein Oberteil (7), welches auf einer dem Probenträger (15) zugewandten Seite eine vormontierte Messeinrichtung (11) für eine rastersondenmikroskopische oder kraftspektroskopische Messung aufweist, wobei das Oberteil (7) mit dem Grundträger (1) derart verbindbar ist, dass sich eine geschlossene Probenkammer (17) um die zu vermessende Probe bildet und die derart geschlossene Fluidzelle auf das Rastersondenmikroskop bzw. das Kraftspektroskop montierbar ist.

2. Fluidzelle nach Anspruch 1, bei welcher das Oberteil (7) gegenüber dem Grundträger von einer ersten, geöffneten Position in eine zweite, geschlossene Position bringbar und mit dem mit dem Grundträger (1) mechanisch verbindbar ist.

3. Fluidzelle nach Anspruch 1 oder 2, bei welcher das Oberteil (7) mit dem Grundträger (1) gelenkig verbunden ist.

4. Fluidzelle nach Anspruch 2 oder 3, bei welcher an zumindest einem Vorsprung des Grundträgers (1) eine Schnapp- oder Rastverbindung vorgesehen ist, mit welcher das Oberteil (7) in der geschlossenen Position in Eingriff gelangt.

5. Fluidzelle nach Anspruch 1 oder 2, bei welcher der Grundträger eine Halterung (5) umfaßt, welche mit dem Oberteil (7) in der geschlossenen Position in mechanischem Eingriff gelangt, um das Oberteil (7) mit dem Grundträger zu verbinden.

6. Fluidzelle nach Anspruch 5, bei welcher die Halterung (5) als Vorsprung an dem Oberteil (1) nach Art einer Schnapp- oder Rastverbindung ausgebildet ist.

7. Fluidzelle nach einem der vorhergehenden Ansprüche, wobei der Grundträger (1) eine zentrale Öffnung (2) aufweist, in welcher der Probenträger (15) samt einer umlaufenden Dichtung (13) aufgenommen ist, und wobei die Dichtung (13) so ausgestaltet ist, dass sie in Kontakt mit dem Probenträger (15), dem Grundträger (1) und dem Oberteil (7) steht und sich die geschlossene Probenkammer (17) zwischen Oberteil (7), Grundträger (1) und Probenträger (15) bildet.

8. Fluidzelle nach Anspruch 7, bei welcher die Dichtung (13) mehrteilig ausgebildet ist, wobei eine erste umlaufende Dichtung zwischen Probenträger (15) und Grundträger (1) angeordnet und eine zweite umlaufende Dichtung zwischen Grundträger (1) und Oberteil (7) angeordnet ist, derart, das sich die geschlossene Probenkammer (17) zwischen Oberteil (7) Grundträger (1) und Probenträger (15) bildet.

9. Fluidzelle nach einem der vorhergehenden Ansprüche, bei welcher der Grundträger (1) so ausgestaltet ist, dass er über eine lösbare Verbindung mit einer Halterung des Rastersondenmikroskops bzw. Kraftspektroskops montierbar/demontierbar ist.

10. Fluidzelle nach einem der vorhergehenden Ansprüche, bei welcher der Probenträger (15) so ausgestaltet ist, dass er über eine lösbare Verbindung mit einem Probenträgerstellelement (27) des Rastersondenmikroskops bzw. Kraftspektroskops koppelbar ist.

11. Fluidzelle nach einem der vorhergehenden Ansprüche, welche zusätzlich eine bewegliche Verbindung (23) zwischen Oberteil (7) und Grundträger (1) umfasst.

12. Fluidzelle nach einem der Ansprüche 7 bis 11, bei welcher die Dichtung (13) so flexibel ausgestaltet ist, dass sie ihre Dichtfunktion behält, auch wenn sie durch eine Bewegung des Probenträgers (15) verformt wird.

13. Fluidzelle nach einem der vorhergehenden Ansprüche, bei welcher der Grundträger (1) Kunststoff umfasst.

14. Fluidzelle nach einem der vorhergehenden Ansprüche, bei welcher der Probenträger (15) Metall umfasst.

15. Fluidzelle nach einem der vorhergehenden Ansprüche, bei welcher der Grundträger (1) einen Führungsbereich (3) aufweist.

16. Fluidzelle nach einem der vorhergehenden Ansprüche, bei welcher das Oberteil (7) einen Führungsbereich (3) aufweist.

17. Fluidzelle nach einem der vorhergehenden Ansprüche, bei welcher das Oberteil (7) zusätzlich wenigstens einen Fluid-Anschluss (29) aufweist.

18. Fluidzelle nach einem der vorhergehenden Ansprüche, bei welcher der Grundträger (1) wenigstens einen Fluid-Anschluss aufweist.

19. Fluidzelle nach einem der vorhergehenden Ansprüche, welche zusätzlich eine Öffnung (33) aufweist, die abgedichtet ist.

20. Fluidzelle nach Anspruch 19, bei welcher die zusätzlich Öffnung (33) mit einem Septum abgedichtet ist.

21. Fluidzelle nach einem der vorhergehenden Ansprüche, welche zusätzlich einen Griff (21) aufweist.

22. Verwendung einer Fluidzelle nach einem der vorhergehenden Ansprüche, als Einwegzelle für die Durchführung rastersondenmikroskopischer oder kraftspektroskopischer Messungen in einem Rastersondenmikroskop, zum Beispiel einem Rasterkraftmikroskop, oder einem Kraftspektroskop.

23. Verwendung einer Fluidzelle nach einem der vorhergehenden Ansprüche in einem automatisierten Verfahren zur Durchführung rastersondenmikroskopischer oder kraftspektroskopischer Messungen in einem Rastersondenmikroskop, zum Beispiel einem Rasterkraftmikroskop, oder einem Kraftspektroskop.
